# EUROPEAN PATENT APPLICATION

(11) **EP 0 569 180 A2**
(43) Date of publication of application: **10.11.1993**
(21) Application number: 93303234.4
(22) Date of filing: 26.04.1993
(51) Int. Cl.: H04Q 3/00, H04Q 3/545

(54) **Intelligent telecommunications network**

(30) Priority: 08.05.1992 US 880727
(71) Applicant: AT&T Corp., New York, NY 10013-2412 (US)
(72) Inventor: Isidoro, Alessandro L., Howell, New Jersey 07731 (US)
(74) Representative: Johnston, Kenneth Graham

(57) **Abstract**

Telecommunications services are implemented on a public switched telephone network by one or more services network elements, which may be adjuncts or service control points. The services network elements send high level call configuration commands to one or more switching systems which connect calling parties to called parties. The high level call configuration commands direct the switching system to change from an initial call configuration to a final target call configuration which fully effectuates a desired telecommunication service. The switching system contains a processor which converts the high level call configuration commands to low level primitive messages which directly manipulate call processing resources in a switching system. The design of services network elements and the nature of communications between those network elements and the telecommunications switching systems is simplified by the use of these high level call configuration commands. Also, new services are easily developed and detrimental interactions with existing switching system features is avoided.

## Description

### Technical Field

This invention relates to telecommunications networks. More particularly, this invention relates to intelligent telecommunications networks which provide a variety of services to network subscribers.

### Background

Today's public switched telephone networks comprise one or more central office switching systems trunked together and connected to telephone lines which are directed to each subscriber of the network. A variety of important services is provided to network subscribers via one or more service network elements connected to one or more of the switching systems in the network. The network elements send predetermined commands to the switching systems relating to services desired from the telecommunications network. The switching systems are responsive to the commands so as to configure themselves in an appropriate manner to effectuate the desired services. For example, desired services may include personal communications services, certain 800 number services, and telemarketing. Despite wide acceptance of such intelligent network architectures in principle, there has been no clear industry consensus about how to implement and deploy such systems having the most advanced capabilities. The most significant issues involved are the creation and control of complex call configurations in the switching systems by the services network element, along with resolution of interaction between commanded services and existing switching system features.

The current state-of-the-art for handling such issues is proposed by Bellcore in its document entitled, "Advanced Intelligent Networks Technical Advisory," TA-NWT-001123, Issue 1, dated May 1991. Bellcore proposes in this document that services network elements, such as adjuncts and service control points (SCP's), produce a set of low level service instructions to the switching system which directly manipulate call topology component resources in order to reach a desired switch configuration. These service instructions comprise call segment connectivity control commands involving individual leg manipulation operations (LMO's) and similar low level instructions. See, for example, Section 6.3, pp. 6-96 et seq. in the Bellcore document. These instructions directly manipulate low-level switching system resources and, therefore, contend for the use of these resources with h existing switching system features. Difficult to solve feature interaction problems are thereby produced which directly impact all existing switch features. The required low-level transformations also are difficult to design and do not always naturally lead to a target switch configuration. These difficulties are particularly evident in the field of personal communication services. In addition, the services software using low level transformation builds a target call topology in a relatively cumbersome step-by-step fashion which complicates the design of the services network elements and the communications path between those elements and the switching systems. Each step corresponds to a message from the services network element to the switching system, along with an acknowledgement from the switching system that the message has been received. On average, the number of low level messages needed to put the switching system in a desired configuration is greater than one, thus complicating and burdening the communications path between a services network element and a switching system.

### Summary

This invention is an alternative to the low level connectivity control commands such as leg manipulation operations and the like proposed by Bellcore. It has been discovered that call processing functions performed by telecommunications switching systems can be effectively realized with a relatively small number of target call topologies with the switching system producing transformations from one call topology to another. For example, the switching system call processing functions act to produce a transformation from a topology involving a two-party call into a topology involving a three-party call. In this invention such call topologies are implemented in the switching system as a set of call processing objects which will be referred to as call configurations (CC). The call configurations are entered into by the switching system in accordance with the commands of an object oriented network services element which causes transformations from one call configuration to another call configuration by means of a relatively simple set of transfer commands, at least some of which represent a plurality of the low level commands proposed by the prior art.

In one example of the invention, a telecommunications apparatus comprises a network element for producing object oriented call configuration commands and a telecommunication switching system for receiving the call configuration commands and configuring itself in accordance with the call configuration commands. In a further examples of the invention, the network element advantageously may comprise an adjunct or a service control point.

In this invention, the services network element makes its request to the switching system for a transition between call configurations defined by a set of call configuration objects stored in the switching system. The implementation of those call configurations may take into account interaction with existing switch features. The target configurations are easily reached when this invention is used and service software in the services network element is easily implemented. The number of messages needed to accomplish a transition in the switching system from one call configuration to another call configuration is always one, except possibly when exceptionally complex transformations are required. In all cases, the number of object oriented messages between the services network element and the switching system will be one - which is less than the number of messages needed to accomplish many of the corresponding transitions achieved by way of leg manipulation operations and similar low level operations. The number of messages is particularly critical when the service network element communicates with the switching system via a protocol such as the SS7 protocol. In addition to reducing the number of messages, messages sent between the services network element and the switching system may also be simplified which acts to reduce the required bandwidth necessary for the link between the services network element and the switching system as compared with the bandwidth needed to effectuate prior low level operations and the like. The simplicity of this approach lowers the minimum skill level needed by services designers which results in cheaper services and faster introductions to market. More sophisticated services thus are earlier and more easily provided to network subscribers.

### Brief Description of the Drawings

FIG. 1 is a simplified representation of an illustrative public switched telephone network in accordance with this invention.
FIG. 2 represents an illustrative catalog of call configurations for two-and three-party situations.
FIG. 3 is a flow chart illustrating an example of a service provided by the public switched telephone network of FIG. 1 which demonstrates the advantages of this invention as compared with prior art low level operations.
FIG. 4 is another flow chart similarly illustrating the advantages of this invention as compared with low level operations in effectuating another illustrative service provided by the network of FIG. 1.

### Detailed Description

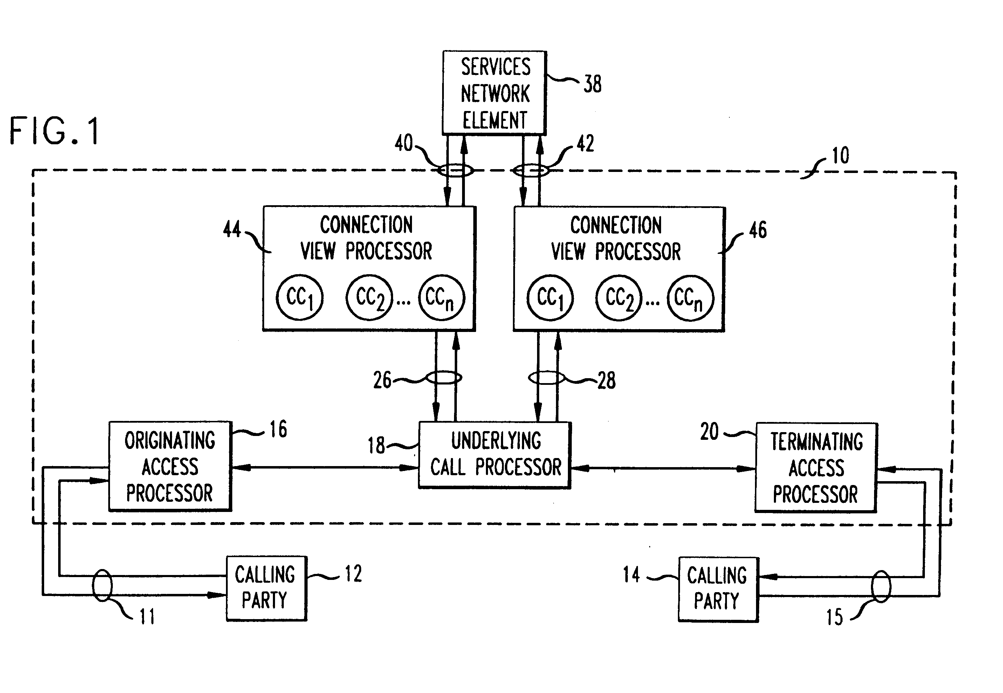

FIG. 1 shows an example of a public switch telephone network in accordance with the principles of this invention. The network comprises at least one central office switching system connected to a network services element which sends simple requests to the switching system to change its current call configuration to a target call configuration. The switching system's internal operations translate the simple call configuration commands into primitive messages which directly manipulate the call processing resources of the switching system so that the state of the switching system is changed from its current call configuration to the target call configuration specified by the call configuration commands from the services network element. The transformation made by the switching system is transparent to the services network element. Designers of services can rely upon a relatively small set of call configurations and permitted transitions which have been programmed into the switching system.

The network of FIG. 1 comprises a central office switching system 10 which acts to connect a calling party 12 connected to the switching system 10 by way of a subscriber line 13 to a desired called party 14 connected to the switching system 10 by way of a subscriber line 15. Although only one switching system 10 and two subscribers are shown in FIG. 1, those skilled in the art will appreciate that public switched telephone networks in accordance with this invention may comprise more than one switching system trunked together as well as many subscribers connected to one or more of the switching systems in the network.

Acall between the calling party 12 and the called party 14 is completed through an originating access processor 16, an underlying call processor 18, and a terminating access processor 20 located in the switching system 10. In effectuating a call between the calling party 12 and the called party 14, the processors 16, 18, and 20 are caused to enter into desired call configurations by way of a series of primitive messages on lines 26 and 28. The switching system 10 can be commanded to provide services to subscribers of the network by means of a services network element 38 which issues a series of high level transfer commands on lines 40 and 42 representing requests to the switching system to change itself from its current call configuration to another target call configuration. The services network element 38 may be a services execution processor or computer which has been programmed to issue call configuration commands on lines 40 and 42 to effectuate desired changes in the call configuration of the switching system 10 so that desired services are provided in the network. Examples of services network elements in accordance with this invention include co-located adjuncts connected to the switching system 10 by way of ISDN BRI/PRI. Examples of such services network elements also include service control points co-located or remotely located with respect to the switching system 10 and communicating directly with the switching system 10 via an SS7 link or indirectly through service transfer points.

The high level transfer commands issued by the services network element 38 comprise a plurality of discrete commands calling for the switching system 10 to change its state from a current call configuration to a target configuration. The call configurations are a small subset of important configurations which are possible in a complicated finite state machine like the switching system 10. At least one of he commands issued by the services network element is a command which causes the switching system 10 to reconfigure itself in a manner which would have involved more than one connectivity control instruction, such as a plurality of leg manipulation operations and the like suggested by the Bellcore document referred to above. In accordance with that document, leg manipulation operations include a split leg operation, which may involve, for example, placing a called party on hold, a join leg operation, and a move leg operation. Legs may be defined to be a connection from the switching system 10 to a user of the resources of the switching system 10. Connectivity control instructions in accordance with Bellcore's proposals which result in switching system operations which are similar to leg manipulation operations include the create call command, the originate call command, and the forward call command. Other such commands are described in Section 6.3, p. 6-96 et seq. in the Bellcore Technical Advisor mentioned above.

Call configuration commands on line 40 are directed to the input of a connection view processor44 which handles the originating part of a telephone call handled by the switching system 10. Call configuration commands on line 42 are directed to the input of a connection view processor 46 which handles the terminating part of a phone call handled by the switching system 10. The connection view processors 44 and 46 may comprise an electronic circuit such as a computer which is able to convert the call configuration commands on lines 40 and 42 into low level primitive messages on lines 26 and 28 which manipulate directly the resources of the call processors in the switching system 10 so that services in accordance with the call configuration commands from the services network element 38 are provided by the switching system 10.

The connection view processors 44 and 46 each contain a number of elements CC₁, CC₂,..., CCₙ, which may be a number of software modules, each of which defines a particular call configuration programmed into the switching system 10. The connection view processors 44 and 46 also contain stored representations of allowable transitions between the stored call configurations CC₁, CC₂,...,CCₙ. Some of the call configurations and the allowed transitions may represent existing features in switching systems like the switching system 10, such as three-way calling, call waiting, speed calling, call back, call forwarding, transfer, and call pick up. The call configurations and allowed transitions may also represent new features to be designed in the future.

The commands on lines 40 and 42 from the services network element 38 comprise a plurality of separate and distinct high level signals each relating to one of the allowed transitions between specified call configurations stored in the connection view processors 44 and 46. At least one of the allowed transitions and its corresponding command from the network services element 38 involves a plurality of leg manipulations and similar low level connectivity control command operations. This arrangement permits the complexity of the services network element 38 to be significantly reduced. It also permits simplification of the link between the services network element 38 and the switching system 10. Specifically, only a small number of simple high-level commands need to flow between the services network element 38 and the switching system 10. This is an advantageous improvement over the situation in the past involving the network services element 38 emitting many lower level leg manipulation commands and the like to cause the switching system 10 to proceed step-by-step through a number of interim states or configurations to accomplish a transition from its current state to a desired state. New services can easily be developed and quickly brought to market through this high level interaction between the network element 38 and the switching system 10 in accordance with this invention. Conflicts between service requests caused by use of operations requested by low level commands can be avoided by using this invention.

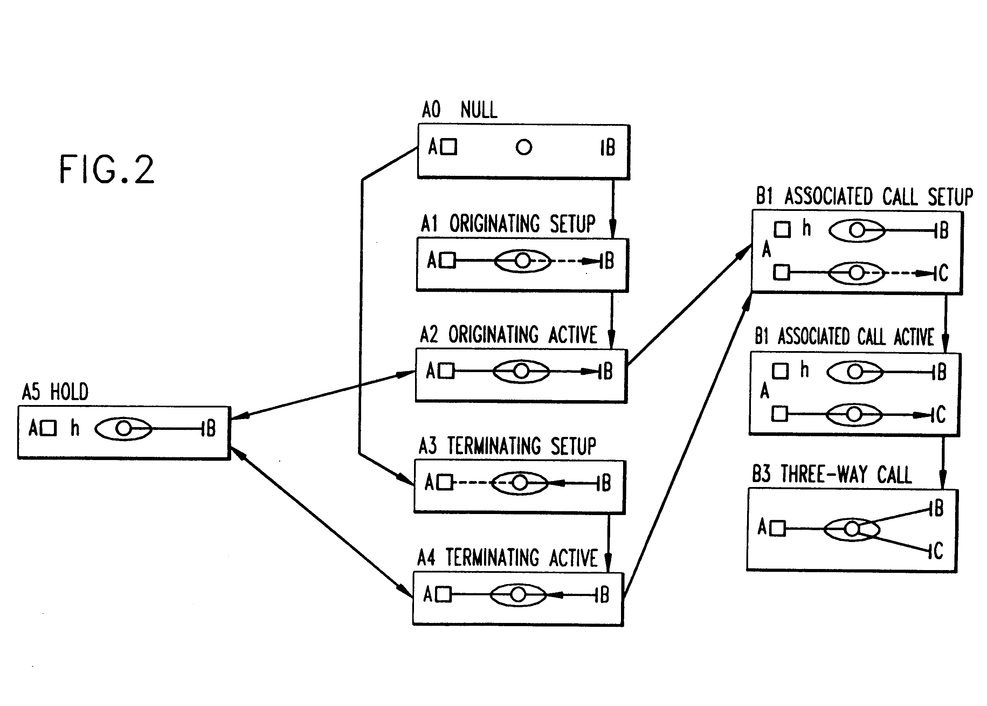

FIG. 2 shows an illustrative group of call configurations AO-A5 and B1-B3 useful in two-party and three-party calling situations. The switching system 10 may make a transition from the null call configuration A0, in which the initiator of a phone call is still on-hook, to an originating set-up call configuration AI where the switch is in a set-up phase for a two-party phone call. This corresponds to a situation where a caller has picked up the telephone and has entered appropriate digits to effectuate the phone call. In the A1 call configuration, the switching system is in the process of determining how to respond to the information entered by the caller. The switching system 10 then enters into another call configuration A2 which is the originating side's active call configuration. In this call configuration A2, the switching system 10 begins to signal the rest of the network to establish a connection between the calling party and the called party. Once the originating side of the connection has gone active in call configuration A2, the terminating side eventually will enter a set-up call configuration A3. The call configuration A3 involves a set-up phase for the terminating side of the call, namely, a phase whereby a switching system at the terminal end of the call is apprised of an incoming call and is deciding where and how to pass it along. The end switch then enters an active call configuration A4 whereby the called party is notified that there is a call by way of a ringing signal. The calling party hears the ringing and the called party then goes off-hook and answers the call in call configuration A4. Either the caller or the called party may be placed on hold as represented by call configuration A5 of FIG. 2.

In three-party situations, the called party may be placed on hold by the calling party and the calling party may place an associated call to a second called party. This causes the switching system 10 to enter into a call configuration B1 involving the set-up of an associated call to a second called party. The switching system 10 enters into call configuration B2 when the associated call becomes active, in other words, when the call to the second called party goes active. The call from the initiator to the two other called parties may be bridged together in a three-way conference. This is call configuration B3 in FIG. 2.

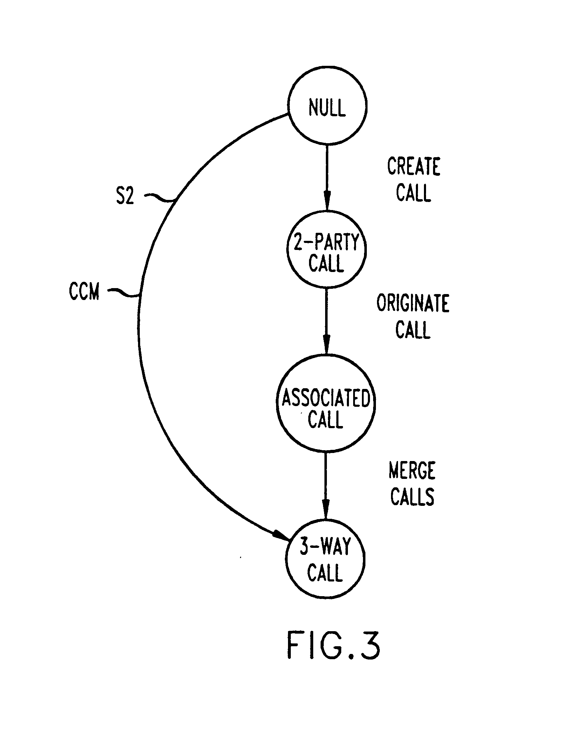

FIG. 3 illustrates how this invention simplifies the communication between the services network element 38 and the switching system 10. FIG. 3 shows an intelligent network providing an advanced network controlled conference call capability. The intelligent network automatically sets up the conference call in response to a relatively simple request from a subscriber to the network. The subscriber picks up the telephone and dials a special code such as *77. The subscriber then dials the directory number of one of the parties to the conference call followed by production of a special designation at the end of the first directory number such as production of a signal resulting from depression of the # key. The subscriber then dials the directory number of a second party to the conference call and the network automatically sets up the conference.

In a situation like the one proposed in the Bellcore Technical Advisory, the network begins in a null state AO where the initiator of the conference call is still on hook. The initiator first goes off hook and dials the special code and the directory numbers of the other participants to conference call. This causes the services network element 38 to emit a low-level command to the switching system 10 representing a connectivity control operation referred to as "create call" by Bellcore. The switching system establishes a two-party call between the initiator and a first called conference participant in response to the "create call" command.

The services network element 38 then emits a low level connectivity control command known as the "originate call" command which causes the first called participant of the conference call to be placed on hold and which causes a second associated phone call to be completed to a second called participant to the conference call. This causes the switching system 10 to enter into an associated call state. A "merge call" connectivity control command from the network element 38 then causes the calls from the initiator to the two other participants of the conference call to be bridged into a three-way call state in FIG. 3. As those skilled in the art will appreciate, such an arrangement involves the input by the network element 38 of a relatively large number of complicated connectivity control commands to the switching system 10 to effect a transition from the null state to the state where the conference call is completed.

This invention, on the other hand, can involve a dramatic reduction in the number of signals needed to be transmitted between the network element 38 and the switching system 10 to accomplish a service such as the intelligent network created conference call of FIG. 3. All that is involved is a single, simple command - which may be one simple digital word command - from the network element 38 to the connection view processor44 in the switching system 10 which requests a transition from the null state directly to a three-party call configuration B3 as represented by arrow 52 via a call configuration manipulation (CCM) operation. The connection view processor 44 uses the stored representations of the null state and call configuration B3 stored therein, along with the stored representations of an allowed transition between these two states, to create a series of primitive messages. The primitive messages interact in predefined and orderly fashion with other features of the switch and are used by the various processors in the switching system 10 to cause the switching system to automatically make a transition from the null call configuration AO to the call configuration B3 in response to entry of information by the initiating party and the appropriate high level command from the network element 38. Thus, a single high level command causes the switching system 10 to proceed on its own between an initial present call configuration to a desired target call configuration in which a desired service is being fully effectuated. There is no need to have the network services element 38 issue further commands to step the switching system 10 through any intermediate or interim states which may fall between the initial and final call configuration as was the case in the prior systems using low level connectivity commands.

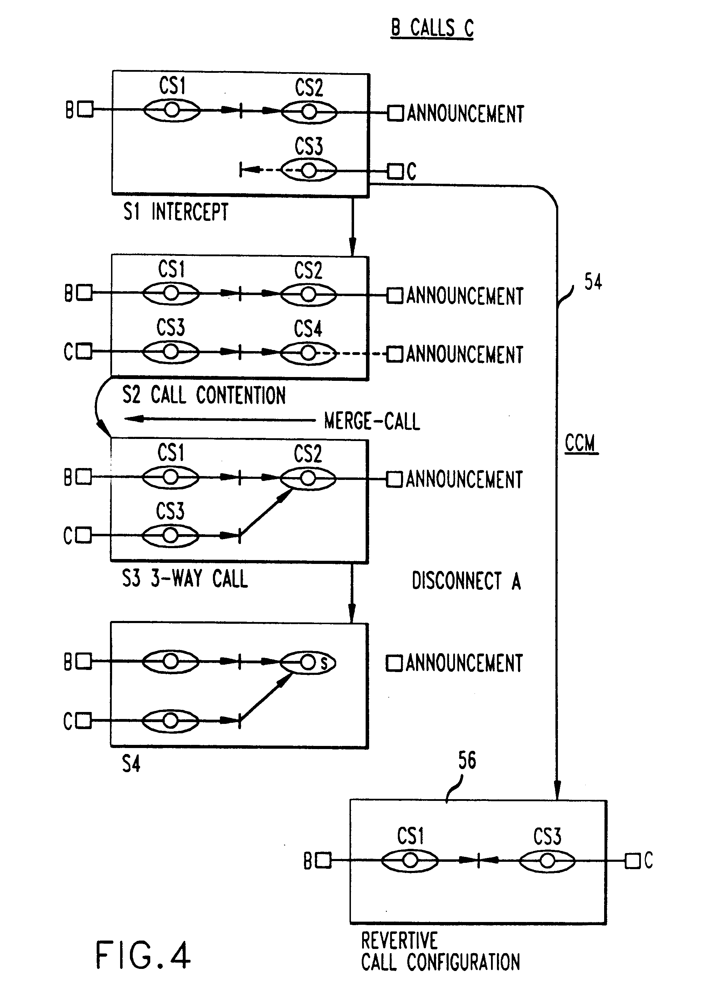

FIG. 4 shows another example of a service which may be advantageously effectuated by using this invention in a public switched telephone network like the one in FIG. 1. As in FIG. 3, there is shown in FIG. 4 comparative procedures involving the prior low level connectivity control operations commanded by a prior service network element and a corresponding procedure accomplished by this invention. The service provided by the network represented in FIG. 3 is a personal communications service involving a subscriber B making a call to a personal communications subscriber C. The subscriber B is notified by an announcement that subscriber C is unavailable. The announcement may direct subscriber B to take some action to notify subscriber C of the call from subscriber B. For example, subscriber B may be instructed to leave a voice mail message for subscriber C or may be allowed to request that the network page subscriber C. While subscriber B is connected to the announcement, subscriber C may make a telephone call to the network via his personal telecommunications equipment, such as a cellular telephone as shown in state S1. The subscriber C may be prompted to make this telephone call by a page automatically sent by the network in response to the call from subscriber B. Subscriber C is then connected with the announcement as shown in state S2. The services network element 38 then issues a low-level merge call command which causes the switching system 10 to enter a three-way calling state S3 involving subscriber B, subscriber C, and the announcement. The network element 38 then issues a "disconnect announcement" message and the switching system 10 enters a state S4 which is similar to a three party call. State S4 involves a connection between subscribers B and C and a surrogate leg S which must be maintained in current switching system designs to keep the connection between subscribers B and C. As shown in FIG. 4, a service involving an automatic connection of subscribers such as subscribers B and C involves the network element 38 issuing a number of low-level commands which cause the switching system 10 to proceed step-by-step through a number of interim states defining a path between an initial state like the state S1 and a final target state like state S4 in which the switching system is fully effectuating the desired service.

In a telecommunications network having this invention, on the other hand, only a single high level command which defines a transition from an initial state to a final target state which fully effectuates the desired service is necessary. Circuitry in the switching system translates the high level command into the required primitive messages which directly manipulate call processing resources of the switching system 10. As shown in FIG. 4, when the switching system 10 is in state S1, a single call configuration command 54 is issued by the network element 38 which causes the switching system 10 to engage in a call configuration manipulation CCM which transfers the condition of the switching system from state S1 to a revertive call configuration 56, which directly connects subscriber B with subscriber C. In addition to simplifying the communications between the network element 38 and the switching system 10, this invention also permits a call configuration 56 which is not currently obtainable through the use of current low level operations such as leg manipulation, operations and the like, to be designed and incorporated into the switching system 10. Configuration 56 is noteworthy in that no surrogate leg S needs to be created or maintained in order to connect subscriber B with subscriber C.

## Claims

1. A telecommunications apparatus, comprising:
a network element for producing object oriented call configuration commands comprising a means for producing a plurality of discrete commands each representing a commanded transition from a current call configuration to a target call configuration, at least one of the call configuration commands representing a plurality of call segment connectivity control commands; and
a telecommunication switching system for receiving the call configuration commands and configuring itself in accordance with the call configuration commands.

2. The telecommunications apparatus of claim 1, in which the network element for producing call configuration commands comprises an adjunct.

3. The telecommunications apparatus of claim 1, in which the network element for producing call configuration commands comprises a service control point (SCP).

4. The telecommunications apparatus of claim 1, in which the network element for producing call configuration commands comprises a service execution processor.

5. The telecommunications apparatus of claim 1, in which the telecommunications switching system comprises:
a storage means containing representations a plurality of predetermined call configurations and a plurality of preselected transitions between the call configurations.

6. A telecommunications apparatus, comprising:
a services network element for producing one or more high level commands at least one of which represents a transition from an initial call configuration to a final target call configuration defining a fully effectuated telecommunications network service configuration, the transition involving a path containing one or more interim switch configurations between the initial call configuration and the final call configuration; and
a telecommunications switching system for receiving the call configuration commands from the network element and changing its configuration from the initial configuration to the final configuration in response to the configuration commands.

7. A method of providing services in an intelligent telecommunications network, comprising the steps of:
producing at least one high level command representing a transition from an initial call configuration to the a final target call configuration defining a fully effectuated network service configuration, the transition involving a path containing one or more interim switch configurations between the initial call configuration and the final call configuration; and
receiving the high level command in a telecommunications switching system and converting the high level command to a plurality of primitive messages which control switching system resources to effectuate the transition from the initial configuration to the final configuration.

8. A public switched telephone network, comprising:
one or more telecommunications switching systems for connecting calling parties with called parties; and
one or more services network elements for producing at least one high level command for input to one or more of the switching systems representing a transition from an initial call configuration to a final target call configuration defining a fully effectuated network service configuration.

9. The public switched telephone network of claim 8, in which the high level command is one of a plurality of discrete commands at least one of which represents a transition involving a plurality of call segment connectivity control operations.
